# EUROPÄISCHE PATENTSCHRIFT

(11) **EP 0 744 325 B1**
(45) Veröffentlichungstag und Bekanntmachung des Hinweises auf die Patenterteilung: **14.07.1999**
(21) Anmeldenummer: 96106477.1
(22) Anmeldetag: 24.04.1996
(51) Int. Cl.: B60R 22/44

(54) **Federangetriebener Aufroller für Sicherheitsgurte bei Kraftfahrzeugen**
Spring driven retractor for seat belts in motor vehicles
Rétracteur actionné par ressort pour ceintures de sécurité de véhicules automobiles

(30) Priorität: 22.05.1995 DE 19518772
(43) Veröffentlichungstag der Anmeldung: 27.11.1996
(73) Patentinhaber: TAKATA (EUROPE) VEHICLE SAFETY TECHNOLOGY GmbH, D-89081 Ulm (DE)
(72) Erfinder: Kopetzky, Robert, 89173 Lonsee (DE); Müller, Frank, 89134 Blaustein (DE); Diepold, Ulrich, 89081 Ulm (DE); Dreizler, Sabine, 70619 Stuttgart (DE); Pietschmann, Frank, 89567 Sontheim (DE); Pleyer, Matthias, 89250 Ulm (DE)
(74) Vertreter: Manitz, Gerhart, Dr.

(56) Entgegenhaltungen:
- EP-A- 0 529 265
- EP-A- 0 581 228

## Beschreibung

Die Erfindung betrifft einen federangetriebenen Aufroller für Sicherheitsgurte bei Kraftfahrzeugen nach dem Oberbegriff des Patentanspruchs 1.

Bei federangetriebenen Gurtaufrollern besteht das Problem, daß mit zunehmendem Auszug des Sicherheitsgurtes die Federspannung zunimmt, so daß die beispielsweise am Anfang nur 2N betragende Rückzugskraft am Sicherheitsgurt bei voll ausgezogenem Gurt bis 18N anwachsen kann. Zu dieser starken Zunahme der Rückzugskraft trägt auch der Umstand bei, daß der Durchmesser der Gurtbandrolle auf der Wickelspindel mit zunehmendem Auszug des Gurtes abnimmt, wodurch zunehmend eine größere Kraft auf den Gurt übertragen wird.

Um diesen Nachteil zu beheben, ist es bereits bekanntgeworden (US-PS 39 97 126; DE-OS 25 53 642; DE-OS 33 13 580; DE-U-75 33 791, und die gattungsbildende EP 0 581 228 A1), zwischen die Gurtaufrollspindel und die durch Drehen einer Wellen zu spannende Spiralfeder ein Getriebe zu schalten, welches aus zwei parallel zueinander angeordneten und seitlich miteinander ausgerichteten Zuggliedrollen besteht, die gegenläufig konisch oder sonstwie verjüngend zulaufen und durch ein auf sie aufgewickeltes Zugglied, insbesondere Seil, Faden oder Band drehfest verbunden sind. Durch geeignete Ausbildung der Fadenrollen kann somit beim Auszug des Sicherheitsgurtes eine weitgehend konstante Rückzugskraft erzielt werden. Es ist auch möglich, sonstige gewünschte Rückzugskraftverläufe durch geeignete Formgebung der Fadenrollen zu verwirklichen.

Problematisch bei den vorbekannten Gurtaufrollern der eingangs genannten Gattung ist, daß, wenn die Rückzugskraft im angelegten Zustand so bemessen ist, daß der Gurt zwar straff am Fahrzeuginsassen anliegt, diesen aber nicht durch übermäßige Spannung belästigt, die Rückzugskraft bei abgelegtem Gurt häufig nicht ausreicht, um den Sicherheitsgurt sicher und vollständig in seine Ruhelage zurückzuziehen. Dies ist selbst dann problematisch, wenn die Erzeugenden der Fadenrollen zwei entgegengesetzte Krümmungen und einen Wendepunkt dazwischen aufweisen, wodurch die Gurt-Rückzugskraft im abgelegten Zustand grundsätzlich erhöht werden könnte. Außerdem ist es baulich aufwendig, insbesondere beide Fadenrollen mit einer entsprechend kompliziert profilierten Außenfläche zu versehen.

Das Ziel der Erfindung besteht darin, einen federangetriebenen Aufroller für Sicherheitsgurte der eingangs genannten Gattung zu schaffen, bei dem die Rückzugskraft des abgelegten Sicherheitsgurtes insbesondere im letzten Stadium des Einzugsvorganges so hoch ist, daß auch ohne Nachhelfen seitens des Fahrzeuginsassen der Sicherheitsgurt vollständig in seine Bereitschaftsposition zurückgezogen und dort gehalten wird, gleichwohl aber bei Auszugslängen, wie sie bei angelegtem Sicherheitsgurt auftreten, nur geringe Anlagekräfte wirken.

Zur Lösung dieser Aufgabe sind die Merkmale des kennzeichnenden Teils des Anspruches 1 vorgesehen. Vorteilhafte Weiterbildungen der Erfindung entnimmt man den Patentansprüchen 2 bis 10.

Der Erfindungsgedanke ist also darin zu sehen, daß zumindest eine der beiden Fadenrollen und vorzugsweise die zweite Fadenrolle entlang ihrer Achse an einer bestimmten Stelle eine sprunghafte Durchmesserveränderung aufweist, wobei lediglich durch einen geeignet gekrümmt verlaufenden Übergangsrillenbereich dafür zu sorgen ist, daß der Faden stetig und ohne die Gefahr, aus seiner Führungsrille herauszuspringen, von der Führungsrillenwindung mit dem kleinsten Durchmesser des ersten Aufrollbereiches auf den Führungsrillenbereich mit dem größten Durchmesser des zweiten Aufrollbereiches überführt wird. Diese Überführung soll äußerstenfalls über einen Winkel von 360° vollzogen sein, vorzugsweise jedoch gemäß Anspruch 6. Auf diese Weise verteilt sich die relativ sprunghafte Änderung der Gurtauszugskraft nach dem Ablegen des Gurtes über höchstens eine Umdrehung, vorzugsweise eine Viertelumdrehung bis eine Dreiviertelumdrehung und insbesondere eine halbe Umdrehung der stufenförmigen Fadenrolle.

Besonders vorteilhaft ist es, wenn die erste Fadenrolle einen exakt kegelstumpfförmigen Verlauf hat, so daß sie gegenüber den bekannten Gurtaufrollern der eingangs genannten Gattung baulich nicht grundlegend verändert werden muß. Die erfindungsgemäß abgestufte Fadenrolle ist ihrerseits baulich sehr einfach zu verwirklichen, weil sie bevorzugt aus zwei axial gestaffelten kegelstumpfförmigen Bereichen besteht, die über eine ebene Ringstufe aneinandergrenzen, was mit einfachen spritztechnischen Mitteln zu realisieren ist.

Die Erfindung wird im folgenden beispielsweise anhand der Zeichnung beschrieben; in dieser zeigt:
- Fig. 1: eine teilweise geschnittene Ansicht eines erfindungsgemäßen federangetriebenen Aufrollers für einen Sicherheitsgurt,
- Fig. 2: eine perspektivische, rein schematische Darstellung nur der beiden konischen Fadenrollen mit dem darauf angeordneten Faden,
- Fig. 3: eine Stirnansicht der zweiten Fadenrolle in Richtung des Pfeiles III in Fig. 1, und
- Fig. 4: einen Schnitt nach Linie IV-IV in Fig. 3.

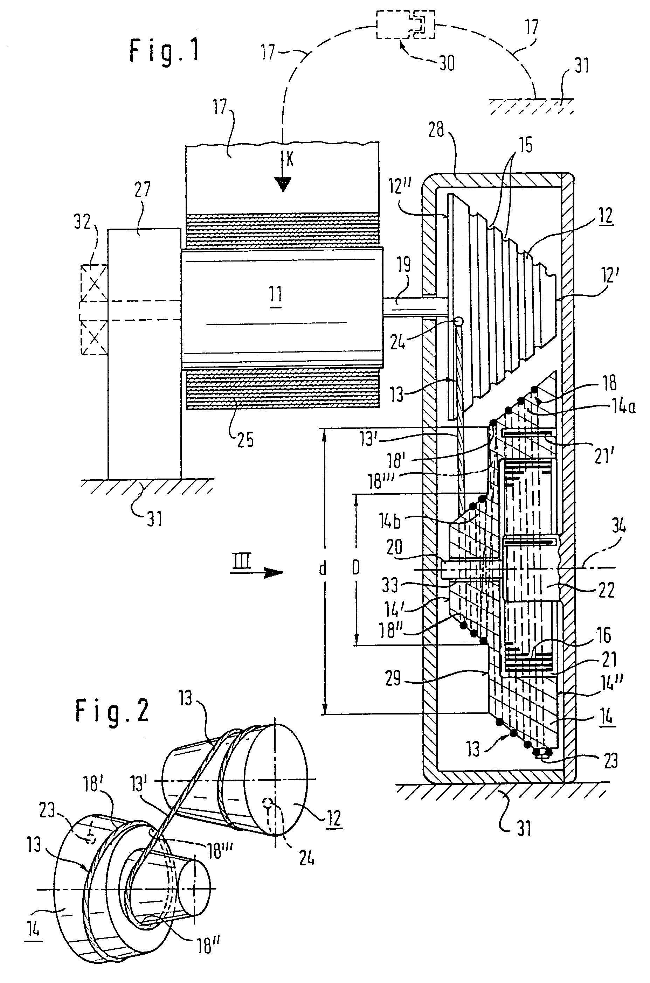

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist, der in der gestrichelt angedeuteten Weise über ein übliches Gurtschloß 30 um den Körper eines nicht dargestellten Fahrzeuginsassen herum zum Fahrzeugchassis 31 geführt und dort befestigt ist. Die Erfindung ist nicht nur bei Zwei-, sondern auch bei Dreipunktgurten anwendbar. Die Gurtrolle 11 ist mittels einer Drehwelle 19 drehbar an einem Gehäuse 28 gelagert, welches seinerseits unten am Fahrzeugchassis 31 befestigt ist. An dem von der Gurtrolle 11 abgewandten Ende der Drehwelle 19 ist innerhalb des Gehäuses 28 eine konisch ausgebildete Fadenrolle 12 mit einer kleinen und einer großen Stirnfläche 12' bzw. 12'' angeordnet, welche auf ihrem Umfang mit einer wendelförmigen Führungsrille 15 versehen ist. Auf der von der Fadenrolle 12 abgewandten Stirnseite der Gurtrolle 11 ist nur rein schematisch eine Gurtauszugs-Sperrvorrichtung 27 angedeutet, welche am Fahrzeugchassis 31 befestigt ist und das weitere Ausziehen des Gurtes 17 bei unfallbedingten Beschleunigungen und/oder einem zu plötzlichen Ausziehen des Sicherheitsgurtes 17 verhindert. Außerdem ist an der in Fig.1 linken Stirnseite der Gurtrolle 11 schematisch ein Gurtstraffer 32 angedeutet, welcher beim Auftreten einer unfallbedingten Beschleunigung am Fahrzeug beispielsweise durch Auslösen einer pyrotechnischen Ladung die Gurtrolle 11 um ein vorbestimmtes Stück von z.B. 5 bis 10 cm aufrollt, um dadurch den Sicherheitsgurt 17 fest an den Körper der angeschnallten Person anzulegen. Aufgrund der Gurtauszugs-Sperrvorrichtung 27 bleibt dieser fest angezogene Zustand des Sicherheitsgurtes 17 bis zur Beendigung der unfallbedingten Beschleunigung erhalten.

Nach Fig. 1 ist im Gehäuse 28 neben der Fadenrolle 12 mit zur Drehwelle 19 beabstandeter und paralleler Achse 34 sowie seitlich ausgerichtet eine weitere, eine kleine und eine große Stirnfläche 14' bzw. 14'' aufweisende Fadenrolle 14 vorgesehen, welche zwei gegenläufig zu der ersten Fadenrolle 12 konisch verlaufende Aufrollbereiche 14a, 14b aufweist und deren kleinster Durchmesser an der Stirnfläche 14' kleiner als der größte Durchmesser der ersten Fadenrolle 12 ist. Die in Fig. 1 linke große Stirnfläche 12'' und die rechte kleine Stirnfläche 12' der kleineren Fadenrolle 12 liegen im wesentlichen in einer Ebene mit der linken kleinen Stirnfläche 14' bzw. der rechten großen Stirnfläche 14'' der größeren Fadenrolle 14. Auf dem Umfang der zweiten Fadenrolle 14 ist eine wendelförmige Führungsrille 18 vorgesehen. Die Drehachse 34 wird durch eine gehäusefeste Welle 20 definiert, auf der die zweite Fadenrolle 14 mittels einer in ihr vorgesehenen zentralen Bohrung 33 drehbar angeordnet ist.

Die zweite Fadenrolle 14 weist gemäß Fig. 1 auf der Seite ihrer großen Stirnfläche 14'' einen koaxialen Hohlraum 21 auf, in welchem eine Spiralfederanordnung 16 untergebracht ist, die einerseits an einem die Welle 20 tragenden gehäusefesten Zapfen 22 und andererseits bei 21' an der Umfangswand des Hohlraumes 21 befestigt ist. Die Spiralfederanordnung 16 überträgt auf die Fadenrolle 14 ein Drehmoment, welche einen in ihre Führungsrille 18 eingelegten bei 23 befestigte Faden 13 aufzuwickeln sucht. Der Faden 13 erstreckt sich nach den Fig. 1 und 2 als geradliniges Stück 13' von der zweiten Fadenrolle 14 zur ersten Fadenrolle 12, wo der Faden 13 bei 24 befestigt ist.

Erfindungsgemäß befindet sich zwischen dem ersten Aufrollbereich 14a und dem axial unmittelbar anschließenden zweiten Aufrollbereich 14b eine ebene und senkrecht zur Welle 20 verlaufende Übergangsfläche 29, von der aus sich in Richtung der kleinen Stirnfläche 14' der zweite Aufrollbereich 14b axial erstreckt.

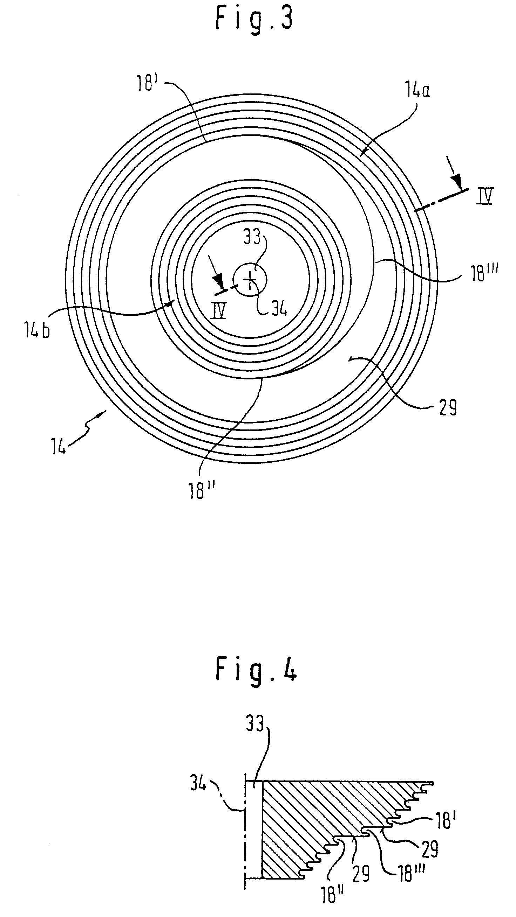

Nach den Fig. 1 bis 3 geht von der Führungsrillenwindung 18' des ersten Aufrollbereiches 14a mit dem kleinsten Durchmesser d tangential ein Übergangsrillenbereich 18''' aus, der sich spiralförmig über einen Winkel von 180° zur Führungsrillenwindung 18'' des zweiten Aufrollbereiches 14b mit dem größten Durchmesser D erstreckt. Insbesondere aus Fig. 4 erkennt man, daß der Übergangsrillenbereich 18''' axial von der ebenen Übergangsfläche 29 vorspringt.

Die zweite Fadenrolle 14a ist insgesamt als ein einheitliches Spritzgußteil hergestellt.

In Fig. 1 ist der Sicherheitsgurt 17 in der am weitesten aufgewickelten Position gezeigt, wo der Faden 13 von der ersten Fadenrolle 12 weitgehend abgewickelt ist und die zweite Fadenrolle 14 weitgehend voll mit dem Faden 13 bewickelt ist. Das von der ersten Fadenrolle 12 kommende Fadenstück 13' läuft hierbei in den zweiten Aufrollbereich 14b im Bereich des kleinsten Durchmessers desselben ein. In gestrichelten Linien sind in Fig. 1 diejenigen Bereiche des Fadens 13 angedeutet, die in Fig. 1 oberhalb der Achse der feststehenden Welle 20 verlaufen. Strichpunktiert ist der sich in Fig. 1 im wesentlichen unterhalb der Achse der Welle 20 erstreckende Übergangsrillenbereich 18''' angedeutet.

Wird nun der Gurt 17 entgegen der Rückzugskraft K in Fig.1 langsam ausgezogen, so dreht sich die erste Fadenrolle 12 in einem solchen Drehsinn, daß der Faden 14 sukzessive auf die erste Fadenrolle 12 aufgewickelt und von der zweiten Fadenrolle 14 abgewickelt wird, wobei er sich zunehmend in die Führungsrille 15 einlegt und aus der Führungsrille 18 entfernt. Dabei wird die Spiralfederanordnung 16 zunehmend gespannt. Bei schnellem Ausziehen des Sicherheitsgurtes 17 rastet in üblicher Weise die Auszugssperre 27 ein.

Erfolgt dagegen ein langsames Ausziehen des Sicherheitsgurtes 17 aus der Position nach Fig. 1, so muß der Fahrzeuginsasse zunächst die durch den relativ geringen maximalen Durchmesser D des zweiten Aufrollbereiches 14b bedingte vergleichsweise hohe Auszugskraft solange überwinden, bis der Faden 13 auch aus der letzten Führungsrillenwindung 18'' des Aufrollbereiches 14b abgewickelt ist. Nunmehr wird bei weiterem Ausziehen des Sicherheitsgurtes 17 der Faden auch von dem Übergangsrillenbereich 18''' abgewickelt, so daß das gerade Fadenstück 13' sich schließlich von der Führungsrillenwindung 18'' des ersten Aufrollbereiches 14a mit dem kleinsten Durchmesser d zur ersten Fadenrolle 12 erstreckt. Aufgrund des relativ zum größten Durchmesser D des zweiten Aufrollbereiches 14b sprunghaft angewachsenen kleinsten Durchmesser d des ersten Aufrollbereiches 14a erniedrigt sich ab jetzt die weitere Auszugskraft des Sicherheitsgurtes 17 entsprechend sprunghaft, wodurch nach dem Schließen des Gurtschlosses 30 nur eine geringe Spannkraft vorliegt und der Insasse durch das Anlegen des Sicherheitsgurtes nur in minimalem Maße belästigt wird. Die erheblich herabgesetzte Rückzugskraft K reicht aber noch aus, um ein zu loses Anliegen des Sicherheitsgurtes 17 am Fahrzeuginsassen zu vermeiden.

Die axiale Länge des ersten Aufrollbereiches 14a ist so bemessen, daß der Faden 13 sich im angelegten Zustand des Sicherheitsgurtes 17 auf diesem Aufrollbereich 14a befindet und erst nach dem Ablegen des Sicherheitsgurtes 17 bei geöffnetem Gurtschloß 30 und bereits teilweise erfolgtem Einziehen desselben auf den eine wesentlich höhere Rückzugskraft K gewährleistenden zweiten Aufrollbereich 14b gelangt.

## Patentansprüche

1. Federangetriebener Aufroller für Sicherheitsgurte (17) bei Kraftfahrzeugen mit einer am Fahrzeugchassis (31) drehbar gelagerten Gurtrolle (11), die durch eine bei unfallbedingten Beschleunigungen und/oder bei versuchtem Schnellen Auszug des Sicherheitsgurtes (17) auslösbare Auszugssperre (27) gegen Drehung in Auszugsrichtung sperrbar ist und drehfest, insbesondere koaxial und direkt, mit einer ersten, sich in einer Axialrichtung verjüngenden, vorzugsweise kegelstumpfförmig ausgebildeten Fadenrolle (12) mit einer wendelförmigen Führungsrille (15) auf ihrem Umfang verbunden ist, welche über einen entgegen dem Wickelsinn des Sicherheitsgurtes (17) auf der Gurtrolle (11) in die Führungsrille (15) gewickelten, mit einem Ende an der Fadenrolle (12) befestigten (24) Faden (13) drehfest mit einer weiteren parallel und in seitlicher Ausrichtung zu ihr angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt (23) und in deren Führungsrille (18) der Faden (13) aufgewickelt ist, und die durch eine Federanordnung (16), vorzugsweise eine Spiralfederanordnung, in Aufwickelrichtung des Fadens (13) auf der zweiten Fadenrolle (14) und des Sicherheitsgurtes (17) auf der Gurtolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12,14) befindlichen Fadenwindungen übergeht,
dadurch gekennzeichnet,
daß eine oder beide Fadenrollen (12, 14), vorzugsweise die zweite Fadenrolle (14) zwei axial hintereinander angeordnete, sich in entgegengesetzter Richtung wie die andere, vorzugsweise die erste Fadenrolle (12) verjüngende Aufrollbereiche (14a, 14b) aufweist, wobei der kleinste Durchmesser (d) des neben dem verjüngten Ende der anderen, vorzugsweise ersten Fadenrolle (12) befindlichen ersten Aufrollbereiches (14a) sprunghaft größer als der größte Durchmesser (D) des axial anschließenden, neben dem erweiterten Ende der anderen, vorzugsweise der ersten Fadenrolle (12) befindlichen zweiten Aufrollbereiches (14b) ist.

2. Aufroller nach Anspruch 1,
dadurch gekennzeichnet,
daß beide Aufrollbereiche (14a, 14b) konisch ausgebildet sind, wobei insbesondere der Konuswinkel beider Aufrollbereiche (14a, 14b) gleich ist.

3. Aufroller nach Anspruch 2,
dadurch gekennzeichnet,
daß der Konuswinkel 20 bis 40°, vorzugsweise 25 bis 35° und insbesondere etwa 30° zur Drehachse (20) beträgt.

4. Aufroller nach einem der vorhergehenden Ansprüche,
dadurch gekennzeichnet,
daß die beiden Aufrollbereiche (14a, 14b) axial unmittelbar aneinander angrenzen, wobei insbesondere sich zwischen dem kleinsten Durchmesser (d) des ersten Aufrollbereiches (14a) und dem größten Durchmesser (D) des zweiten Aufrollbereiches (14b) eine in einer Radialebene liegende Übergangsfläche (29) befindet, an der sich ein radial außen tangential an die Führungsrillenwindung (18') des ersten Aufrollbereiches (14a) mit dem kleinsten Durchmesser und radial innen tangential an die Führungsrillenwindung (18'') des zweiten Aufrollbereiches (14b) mit dem größten Durchmesser anschließender, stetig gekrümmter Übergangsrillenbereich (18''') befindet, und daß bevorzugt der Übergangsrillenbereich (18''') sich über einen Winkel von 90° bis 270°, vorzugsweise 135 bis 225° und insbesondere etwa 180° bezogen auf die Achse (34) der Fadenrolle (14) erstreckt.

5. Aufroller nach Anspruch 4,
dadurch gekennzeichnet,
daß der Übergangsrillenbereich (18''') einen spiralförmigen Verlauf hat.

6. Aufroller nach einem der vorhergehenden Ansprüche,
dadurch gekennzeichnet,
daß das Verhältnis von kleinstem Durchmesser (d) des ersten Aufrollbereiches (14a) zum größten Durchmesser (D) des zweiten Aufrollbereiches (14b) zwischen 2:1 und 1,4:1, vorzugsweise zwischen 1,5:1 und 1,6:1 liegt.

7. Aufroller nach einem der vorhergehenden Ansprüche,
dadurch gekennzeichnet,
daß der kleinste Durchmesser (d) des ersten Aufrollbereiches (14a) zwischen 30 und 60 mm, vorzugsweise zwischen 40 und 50 mm und insbesondere bei 45 mm liegt.

8. Aufroller nach einem der vorhergehenden Ansprüche,
dadurch gekennzeichnet,
daß der größte Durchmesser (D) des zweiten Aufrollbereiches (14b) zwischen 20 und 40 mm, vorzugsweise zwischen 25 und 35 mm und insbesondere bei etwa 30 mm liegt.

9. Aufroller nach einem der vorhergehenden Ansprüche,
dadurch gekennzeichnet,
daß die axiale Länge der beiden Aufrollbereiche (14a, 14b) im wesentlichen gleich ist.

10. Aufroller nach einem der vorhergehenden Ansprüche,
dadurch gekennzeichnet,
daß die axiale Länge des ersten Aufrollbereiches (14a) und/oder des zweiten Aufrollbereiches (14b) zwischen 5 und 15 mm, vorzugsweise zwischen 8 und 12 mm und insbesondere bei etwa 9 bis 10 mm liegt, und/oder daß auf dem Umfang des ersten Aufrollbereiches (14a) und/oder des zweiten Aufrollbereiches (14b) 4 bis 8, vorzugsweise 5 bis 7 und insbesondere etwa 6 Rillenwindungen vorhanden sind.

## Claims

1. Spring driven winder for safety belts (17) in motor vehicles comprising a belt roller (11) which is rotatably journalled at the vehicle body (31) and which can be blocked against a rotation in the draw-out direction by a draw-out blocking (27) which is triggered in accident caused accelerations and/or in an attempted rapid drawing out of the safety belt (17) and which is rotationally fixedly, in particular coaxially and directly, connected to a first cord roller (12) which contracts in the axial direction, which is preferably designed in the manner of a truncated cone and which has a spiral-shaped guide groove (15) at its periphery, which is rotationally fixedly connected, via a cord (13) which is wound oppositely to the sense of winding of the safety belt (17) on the belt roller (11) into the guide groove (15) and is secured (24) with one end to the cord roller (12), to a further second cord roller (14) with a spiral-shaped guide groove (18) which is arranged parallel and in lateral orientation with respect to it, which contracts in the opposite axial direction, to which the other end of the cord (13) is secured (23), into the guide groove (18) of which the cord (13) is wound up, and which is subject to a bias tension through a spring arrangement (16), preferably a spiral spring arrangement, in the winding up direction of the cord (13) on the second cord roller (14) and of the safety belt (17) on the belt roller (11), with the two guide grooves (15, 18) being designed and arranged on the cord rollers (12, 14) in such a manner that the taut cord piece (13') which connects the two cord rollers (12, 14) merges at least substantially without a crease into both cord windings which are located on the cord rollers (12, 14),
characterised in that
one or both cord rollers (12, 14), preferably the second cord roller (14), has two winding up regions (14a, 14b) which are arranged axially one behind the other and which contract in the opposite direction to the other, preferably the first cord roller (12), with the smallest diameter (d) of the of the first winding-up region (14a), which is located adjacently to the contracted end of the other, preferably first cord roller (12), being abruptly larger than the greatest diameter (D) of the axially adjoining second winding-up region (14b), which is located adjacent to the extended end of the other, preferably the first cord roller (12).

2. Winder in accordance with claim 1
characterised in that
both winding up regions (14a, 14b) are conically designed, with in particular the cone angle of both winding up regions (14a, 14b) being the same.

3. Winder in accordance with claim 2
characterised in that
the cone angle amounts to 20 to 40°, preferably 25 to 35° and in particular to about 30° to the axis of rotation (20).

4. Winder in accordance with one of the preceding claims
characterised in that
the two winding up regions (14a, 14b) border directly on one another axially, with in particular a transition surface (29) which lies in the radial plane being located between the smallest diameter (d) of the first winding-up region (14a) and the largest diameter (D) of the second winding-up region (14b), at which transition surface (29) a continuously curved transition groove region (18''') is located which adjoins radially outwardly tangentially at the guide groove winding (18') of the first winding-up region (14a) with the smallest diameter and radially inwardly tangentially at the guide groove winding (18'') of the second winding-up region (14b) with the largest diameter; and in that the transition groove region (18''') preferably extends over an angle from 90° to 270°, preferably 135 to 225° and in particular about 180° relative to the axis (34) of the cord roller (14).

5. Winder in accordance with claim 4
characterised in that
the transition groove region (18''') has a spiral-shaped course.

6. Winder in accordance with one of the preceding claims
characterised in that
the ratio of the smallest diameter (d) of the first winding-up region (14a) to the largest diameter (D) of the second winding-up region (14b) lies between 2:1 and 1.4:1, preferably between 1.5:1 and 1.6:1.

7. Winder in accordance with one of the preceding claims
characterised in that
the smallest diameter (d) of the first winding-up region (14a) lies between 30 and 60 mm, preferably between 40 and 50 mm and in particular at 45 mm.

8. Winder in accordance with one of the preceding claims
characterised in that
the largest diameter (D) of the second winding-up region (14b) lies between 20 and 40 mm, preferably between 25 and 35 mm and in particular at about 30 mm.

9. Winder in accordance with one of the preceding claims
characterised in that
the axial length of the two winding up regions (14a, 14b) is substantially the same.

10. Winder in accordance with one of the preceding claims
characterised in that
the axial length of the first winding-up region (14a) and/or of the second winding-up region (14b) lies between 5 and 15 mm, preferably between 8 and 12 mm and in particular at about 9 to 10 mm; and/or in that 4 to 8, preferably 5 to 7 and in particular about 6 groove windings are present on the periphery of the first winding-up region (14a) and/or of the second winding-up region (14b).

## Revendications

1. Enrouleur actionné par ressort pour ceinture de sécurité (17) de véhicules automobiles, comprenant un rouleau de ceinture (11) monté en rotation sur le châssis du véhicule (31), ledit rouleau étant susceptible d'être bloqué à l'encontre d'une rotation dans la direction de déroulement au moyen d'un blocage (27) qui se déclenche sous des accélérations qui se produisent lors d'un accident et/ou lors d'une tentative de faire dérouler rapidement la ceinture de sécurité (17), et étant relié solidairement en rotation, en particulier coaxialement et directement, à un premier rouleau à fil (12) en rétrécissement dans la direction axiale, de préférence réalisé sous forme de tronc de cône, avec une rainure de guidage (15) hélicoïdale à sa périphérie, ledit rouleau à fil étant relié solidairement en rotation, au moyen d'un fil (13) enroulé dans la rainure de guidage (15) dans le sens opposé au sens d'enroulement de la ceinture de sécurité (17) sur le rouleau de ceinture (11) et fixé (24) par une extrémité au rouleau à fil (12), à un deuxième rouleau à fil (14) agencé parallèlement à lui-même et en alignement latéral, ce deuxième rouleau à fil étant en rétrécissement dans la direction axiale opposée et présentant une rainure de guidage (18) hélicoïdale, auquel l'autre extrémité du fil (13) est fixée (23) et ce fil (13) est enroulé dans sa rainure de guidage (18), ledit deuxième rouleau à fil étant précontraint par un système à ressort (16), de préférence à ressort spiralé, dans la direction de l'enroulement du fil (13) sur le deuxième rouleau à fil (14) et de la ceinture de sécurité (17) sur le rouleau de ceinture (11), les deux rainures de guidage (15, 18) étant réalisées et agencées de telle manière sur les rouleaux à fil (12, 14) que le morceau de fil (13') tendu qui relie les deux rouleaux fil (12, 14) passe au moins sensiblement sans coude dans les deux enroulements de fil qui se trouvent sur les rouleaux à fil (12, 14),
caractérisé en ce que
l'un des rouleaux à fil (12, 14), ou les deux, de préférence le deuxième rouleau à fil (14), présente deux zones d'enroulement (14a, 14b) agencées axialement l'une derrière l'autre et en rétrécissement en direction opposée à l'autre roulean à fil (12), de préférence le premier, le plus petit diamètre (d) de la première zone d'enroulement (14a) disposée au voisinage de l'extrémité rétrécie de l'autre rouleau à fil (12), de préférence le premier, est supérieur d'une valeur nette au diamètre le plus élevé (D) de l'autre zone d'enroulement (14 b) qui s'y raccorde axialement et disposée au voisinage de l'extrémité élargie de l'autre rouleau à fil (12), de préférence le premier.

2. Enrouleur selon la revendication 1,
caractérisé en ce que
les deux zones d'enroulement (14a, 14b) sont réalisées sous forme conique, et l'angle de cône des deux zones d'enroulement (14a, 14b) est en particulier égal.

3. Enrouleur selon la revendication 2,
caractérisé en ce que
l'angle de cône s'élève entre 20 et 40°, de préférence entre 25 et 35°, et en particulier approximativement 30° par rapport à l'axe de rotation (20).

4. Enrouleur selon l'une des revendications précédentes,
caractérisé en ce que
les deux zones d'enroulement (14a, 14b) sont immédiatement adjacentes l'une à l'autre dans le sens axial, en ce qu'il existe en particulier entre le plus petit diamètre (d) de la première zone d'enroulement (14a) et le plus grand diamètre (D) de la deuxième zone d'enroulement (14b) une surface de transition (29) disposée dans un plan radial, au niveau de laquelle se trouve une zone de rainure de transition (18''') incurvée de façon continue, qui se raccorde radialement à l'extérieur de manière tangentielle à la spire de rainure de guidage (18') de la première zone d'enroulement (14a) avec le plus petit diamètre, et radialement à l'intérieur de manière tangentielle à la spire de rainure de guidage (18'') de la deuxième zone d'enroulement (14b) avec le plus grand diamètre, et en ce que la zone de rainure de transition (18''') s'étend de préférence sur un angle de 90° à 270°, de préférence de 135 à 225°, et en particulier d'environ 180°, par rapport à l'axe (34) du rouleau à fil (14).

5. Enrouleur selon la revendication 4,
caractérisé en ce que
la zone de rainure de transition (18''') présente un tracé en forme de spirale.

6. Enrouleur selon l'une des revendications précédentes,
caractérisé en ce que
le rapport du plus petit diamètre (d) de la première zone d'enroulement (14a) au plus grand diamètre (D) de la deuxième zone d'enroulement (14b) est compris entre 2:1 et 1,4:1, de préférence entre 1,5:1 et 1,6:1.

7. Enrouleur selon l'une des revendications précédentes,
caractérisé en ce que
le plus petit diamètre (d) de la première zone d'enroulement (14a) est compris entre 30 et 60 mm, de préférence entre 40 et 50 mm, et s'élève en particulier approximativement à 45 mm.

8. Enrouleur selon l'une des revendications précédentes,
caractérisé en ce que
le plus grand diamètre (D) de la deuxième zone d'enroulement (14b) est compris entre 20 et 40 mm, de préférence entre 25 et 35 mm, et s'élève en particulier approximativement à 30 mm.

9. Enrouleur selon l'une des revendications précédentes,
caractérisé en ce que
la longueur axiale des deux zones d'enroulement (14a, 14b) est sensiblement égale.

10. Enrouleur selon l'une des revendications précédentes,
caractérisé en ce que
la longueur axiale de la première zone d'enroulement (14a) et/ou de la deuxième zone d'enroulement (14b) est comprise entre 5 et 15 mm, de préférence entre 8 et 12 mm, et en particulier entre environ 9 et 10 mm, et/ou en ce qu'il est prévu sur la périphérie de la première zone d'enroulement (14a) et/ou de la deuxième zone d'enroulement (14b) 4 à 8, de préférence 5 à 7, et en particulier environ 6 spires de rainure.
